# EUROPÄISCHE PATENTSCHRIFT

(11) **EP 1 306 009 B1**
(45) Veröffentlichungstag und Bekanntmachung des Hinweises auf die Patenterteilung: **12.07.2006**
(21) Anmeldenummer: 02023956.2
(22) Anmeldetag: 25.10.2002
(51) Int. Cl.: A21C 7/04, A21C 7/01

(54) **Teigstück-Rundwirkmaschine mit Druckkörper**
Dough piece balling machine with pressure element
Appareil muni d'un élément de pression pour mettre en boule des pièces de pâte

(30) Priorität: 25.10.2001 DE 10152164
(43) Veröffentlichungstag der Anmeldung: 02.05.2003
(73) Patentinhaber: Fritsch GmbH, 97348 Markt Einersheim (DE)
(72) Erfinder: Wehner, Hans Joachim, 49733 Haren (DE); Bernhardt, Udo, 97346 Iphofen (DE)
(74) Vertreter: Götz, Georg Alois

(56) Entgegenhaltungen:
- CH-A- 377 754
- DE-A- 2 521 164
- DE-A- 3 423 190
- DE-C- 460 808
- DE-C- 497 392
- DE-C- 515 921
- DE-C- 569 291
- DE-C- 3 700 091
- DE-C- 3 821 045
- FR-A- 1 054 578
- GB-A- 299 221
- GB-A- 658 627
- US-A- 1 782 006
- PATENT ABSTRACTS OF JAPAN vol. 014, no. 334 (C-0742), 18. Juli 1990 (1990-07-18) & JP 02 124053 A (OSHIKIRI:KK), 11. Mai 1990 (1990-05-11)
- PATENT ABSTRACTS OF JAPAN vol. 1996, no. 10, 31. Oktober 1996 (1996-10-31) & JP 08 149942 A (OSHIKIRI:KK), 11. Juni 1996 (1996-06-11)

## Beschreibung

Die Erfindung betrifft eine Rundwirkmaschine für Teigstücke insbesondere zur Brötchenherstellung, die eine oder mehrere Wirkkammern sowie ein zu deren Abdeckung angeordnetes Wirkband aufweist. Ferner ist die Rundwirkmaschine mit einem federnd abgestützten Druckkörper ausgestattet, mittels welchem - unter Mitwirkung eines oder mehrerer vorzugsweise dämpfender Federelemente - das Wirkband gegen die Öffnung(en) der einen oder mehreren Wirkkammern anlegbar und/oder haltbar ist. Ferner betrifft die Erfindung eine Anordnung zum Zuführen einzelner Teigstücke zu der genannten Teigstück-Wirkmaschine, welche eine Mehrzahl von Wirkkammern aufweist, die in einer Teigstück-Förderrichtung versetzt hintereinander angeordnet sind.

Bei einer bekannten Einrichtung zur Herstellung gleich großer, runder Teigstücke (DE 100 09 300 A1) ist eine schrittweise drehbare Trommel vorgesehen, in deren Mantel eine Anzahl von parallel zur Trommelachse in Reihen nebeneinander angeordneter Teigkammern untergebracht sind. In jeder Teigkammer ist ein verstellbarer Teigkammerkolben angebracht, mittels welchem in der Teigkammer befindlicher Teig gegen ein dort angeordnetes Wirkband gedrückt wird. Dadurch soll ein guter Reibschluß zwischen der Teigmasse in der Teigkammer und dem Wirkband gewährleistet sein.

Bei einer bekannten Rundwirkmaschine (DE 38 21 045 C1) etwa der eingangs genannten Art sind die Wirkkammern rotationssymmetrisch bezüglich einer Drehachse in einer Kammertrommel angeordnet, die sich zwischen einer konzentrischen Wirktrommel und einem von außen über einen Kreisbogenabschnitt beziehungsweise Umschlingungsbereich anliegendem Wirkband dreht. Das Wirkband wird mittels eines zusätzlichen Druckbandes an die Kammeröffnungen gehalten oder gedrückt. Damit nur eine geringe Kraft in radialer Richtung auf das jeweilige Teigstück in einer Wirkkammer ausgeübt wird, ist das Druckband mit seinem dem Beginn eines Wirkband-Umschlingungsbereichs benachbarten Ende über eine Zugfeder elastisch nachgiebig an einem Gestell befestigt. Das andere Druckband-Ende ist an einer Spannvorrichtung angebracht, die mit einem im Gestell gelagerten Winkelhebel gebildet ist. Am Ende von dessen einem Hebelarm ist das Druckband befestigt, während der andere Hebelarm mittels einer Rasteinrichtung in unterschiedlichen Stellungen am Führungsgestell einrastbar ist. In einer Stellung dieses Hebelarms ist das Druckband am stärksten, in einer anderen Stellung am geringsten gespannt. Die Spannung des Druckbandes läßt sich also einerseits durch entsprechende Wahl der genannten Zugfeder und andererseits entsprechend der Einstellung der Spannvorrichtung erreichen. Zweckmäßig ist eine Einstellung derart, dass das Wirkband im Umschlingungsbereich bei Nichtvorhandensein von Teigstücken an der äußeren Oberfläche der Kammertrommel anliegt. Beim Rundwirken der Teigstücke, bei denen deren Durchmesser zunehmend die Kammerhöhen überschreitet, kann es sich ohne nennenswerte Gegenkraft in radialer Richtung von der Oberfläche abheben und übt dann nur eine geringe Kraft in Richtung zur Wirktrommel auf das jeweilige Teigstück aus, so dass der Rundwirkvorgang ungestört und ordnungsgemäß abläuft. Das Wirkband selber übt im Umschlingungsbereich keine aus einer Eigenspannung herrührenden radialen Kräfte auf die Oberfläche der Kammertrommel aus. Allerdings führt die genannte Hebel-Spannmechanik zu einer komplizierten Konstruktion mit vielen Einzelteilen, was den Herstellungs- und Hanhabungs- sowie Montageaufwand erhöht und die Zuverlässigkeit vermindert. Indem die Zugfeder nur am Ende des Wirkbandes außerhalb von dessen Überdeckungs- bzw. Umschlingungsbereichs bezüglich der Wirkkammern angreift, ist die elastisch nachgiebige Federung und Dämpfung aufgrund des Druckbandes, wenn überhaupt, nur mit sehr ungenauer Lokalisierung an den eigentlichen Ort des Wirkprozesses eingeleitet. Von dieser Schrift ist der Oberbegriff von Anspruch 1 abgeleitet:

Der Erfindung liegt die Aufgabe zugrunde, unter Vermeidung der oben genannten, nachteiligen Gesichtspunkte eine gattungsgemäße Teig-Wirkmaschine mit Druckkörper so weiter zu entwickeln, dass sich die Konstruktionsstruktur vereinfacht, die Funktionszuverlässigkeit erhöht und eine dämpfende Federung örtlich möglichst präzise an den Ort des Wirkprozesses eingeprägt werden kann. Zur Lösung wird die im Patentanspruch 1 angegebene Wirkmaschine vorgeschlagen. Weitere Einzelheiten, Merkmale und vorteilhafte Ausgestaltungen ergeben sich aus den abhängigen Ansprüchen.

Indem der Druckkörper nicht mehr, wie nach Stand der Technik, als flexibles, anschmiegsames Band, sondern erfindungsgemäß vielmehr in sich steif und unbiegsam ausgeführt ist, kann die elastisch-federnde Einwirkung der direkt an ihm angreifenden Federelemente in den örtlichen Bereich des Wirkprozesses bzw. in die Wirkkammern übertragen. Die gegebenenfalls dämpfenden Federkräfte lassen sich so in nachgiebige Platten-Anlagenkräfte umsetzen und direkt in den Wirkkammerbereich einleiten. Es entsteht erfindungsgemäß für das Wirkband eine gefedert gelagerte Stützplatte oder ein entsprechend gefedert gehaltener Stützbogen, welche sich je nach Druck, ausgehend von der gewirkten Teigmasse und deren Volumenänderung in der Wirkkammer, ihrer Ruheposition auslenken lassen bzw. entsprechend nachgeben. Mit der Erfindung wird also für das Wirkband auf seiner den Kammern abgewandten Seite eine druckabhängig steuerbare Auf- bzw. Unterlage geschaffen. Damit läßt sich vorteilhaft eine Höhen- bzw. Durchmesser-Zunahme des Teigstücks während des Wirkprozesses in der Wirkkammer durch entsprechendes Nachgeben der Stützplatte oder des Stützbogens kompensieren. Dabei ergibt sich ein schonendes Rundwirken, weil das Teigstück in der Wirkkammer nicht starr und fest eingespannt bzw. eingeklemmt ist, sondern vielmehr im Zuge des Wirkprozesses gleichsam "atmen" und sein Volumen vergrößern kann. Durch das Anhalten einer über alle Wirkkammern steifen, aber gefederten Stützplatte lassen sich etwaige Stoßbewegungen, die in beliebigen Wirkkammern entstehen, im Sinne einer schonenden Teigverarbeitung mildern.

Gemäß einer vorteilhaften Ausbildung der Erfindung sind die Federelemente in einem Abschnitt der Stützplatte oder des Stützbogens in Angriff gebracht, welcher deckungsgleich bzw. überlappend mit den Öffnungen der Wirkkammern verläuft. Damit wird der Vorteil erzielt, dass sich Dämpfungs- und Auflagerkräfte der Federelemente uber den steifen Druckkörper besonders präzise direkt im Bereich der Kammeröffnung, wo der Wirkprozeß stattfindet, einleiten lassen. Somit kann die derart gefederte Stützplatte besonders schnell und genau auf Wirk-Stoßkräfte reagieren, um den Teigstücken der Wirkkammer gegenüber mechanische Reaktionskräfte weitgehend zu kompensieren. Zur Erzielung des Einwirkens der vollen Federkraft ohne Verluste ist es zweckmäßig, die Federelemente mit ihren Federkräften quer bzw. senkrecht zum Wirkband auszurichten. Im Zusammenhang mit der erfindungsgemäßen Steifigkeit des gesamten Druckkörpers läßt sich eine federnd-dämpfende und elastisch-nachgiebige Verhaltensweise des Druckes über das Wirkband auf die Teigstücke in die Wirkkammer voll entfalten.

Gemäß einer vorteilhaften Ausbildung der Erfindung sind die Federelemente als Gas-, insbesondere Luftfedern und/oder als vorzugsweise aktive Hydraulik- oder Pneumatikzylinder realisiert, die beispielsweise im Rahmen eines Regelkreises mit Erfassung von Druck auf zu wirkende Teigstücke angesteuert werden. Der Vorteil der aktiven Zylinder zur Bildung der federnden Luftpolster besteht darin, dass die Federkonstanten während des Betriebs dynamisch an den Druck aufgrund der Wirkkammern und/oder des im Volumen anwachsenden Teigstücks angepaßt werden können. Vor allem bei Verwendung von Druckluft läßt sich vorteilhaft der "Härtegrad", d. h. die elastische Nachgiebigkeit der steifen Stützplatte gegenüber dem Wirkband und den darauf im Wirkprozeß befindlichen Teigstücken einstellen. Die entsprechend gesteuerten "Federkonstanten" können so laufend sich schnell ändernden Randbedingungen des Wirkprozesses Rechnung tragen. Die mittels beispielsweise Luftzylinder gebildeten Luftpolster lassen sich dann durch Aufsetzen der Wirkkammern mit ihren Öffnungsstirnseiten auf das Wirkband auslenken. Neben einer aktiven Ansteuerung von Pneumatikzylindern zur Bildung von Luftpolstern ist es auch denkbar, im Rahmen einer einfacheren Ausbildung den Luftdruck für Luftpolster in federnden Zylindern manuell per Hand anhand von Beobachtungen einer Bedienperson einzustellen.

Auf der Basis der Erfindung besteht zur Herbeiführung des Wirkprozesses eine Möglichkeit darin, mittels erster Antriebsmittel die Wirkkammern längs einer exzentrisch oder spiralartig verlaufenden Bahn in einer Fläche oder Ebene parallel zum Wirkband zu verschieben bzw. zu verfahren. Die Herbeiführung von exzentrisch kreisenden Wirkbewegungen, ausgehend von einer Nullstellung über einen maximal möglichen Wirkausschlag, und die anschließende Rückkehr in die Nullstellung ist im Zusammenhang mit Teig-Wirkmaschinen bereits gelöst und an sich bekannt (vgl. eingangs angesprochene DE 100 09 300 A1 u. a.). Wie weiter unten anhand der Zeichnung erläutert, ist im Erfindungsbeispiel dazu der Einsatz von einem Überlagerungsgetriebe (an sich bekannt) zweckmäßig.

Vor allem für den Fall, dass die Teigstücke auf einem im wesentlichen linear verlaufenden Förderband transportiert werden, besteht eine zweckmäßige Erfindungsausbildung darin, zweite Antriebsmittel vorzusehen, mittels welcher eine Wirkkammer oder ein fester Verbund mehrerer Wirkkammern senkrecht zum Wirkband verstellt und von diesem wieder entfernt werden kann. Damit läßt sich vorteilhaft eine dritte Antriebs-Hin- und Herbewegung der einen oder des Verbandes mehrerer Wirkkammern sowie des Wirkbands und des Druckkörpers kombinieren: Werden ein oder mehrere Teigstücke zum Wirken angeliefert, lassen sich die Wirkkammern mit den zweiten Antriebsmitteln zu den noch ungewirkten Teigstücken absenken. Nachdem diese in den Wirkkammern erfaßt sind, braucht die Förderbewegung des Wirkbandes im Sinne der Erfindung nicht angehalten, sondern kann fortgesetzt werden. Gleichzeitig erfolgt mittels der ersten Antriebsmittel die oben genannte exzentrische und/oder spiralartige Wirkbewegung der Wirkkammern mit den Teigstücken darin. Die erfindungsgemäße Druck- bzw. Stützplatte (oder alternativ Stützbogen) wird dabei von den dritten Antriebsmitteln synchron zum Wirkband und zur überlagerten Transport-Bewegung der Wirkkammern in Förderrichtung mitbewegt.

Um zu Beginn des Wirkvorganges unkontrollierte Bewegungen des Teigstücks (das ja im Durchmesser kleiner sein muß als die Wirkkammer) zu lindern, ist gemäß einer besonderen Ausbildung der Erfindung die Wirkkammer mit einem in der Kammerwandung zum Teigstück führbaren Anwirkkolben ausgestattet. Dieser läßt sich aufgrund eines Gewichtselements (beispielsweise seines Eigengewichts) und/oder mittels eines an der Kammerwandung abgestützten (passiven) Federelements oder auch eines aktiven Druckzylinders gegen das Teigstück fahren und drücken. Mit besonderem Vorteil können die oben angesprochenen Hydraulik- oder Pneumatikzylinder oder sonstige Luftfedern und der oder die gegebenenfalls federnden Anwirkkolben-Antriebe während des Wirkprozesses kombinatorisch zusammenwirken, wodurch der angestrebte Teig-Schonungseffekt nochmals synergistisch erhöht wird. Dazu ist es zweckmäßig, die Federkonstanten der der genannten Feder-Komponenten je nach Umstände und Randbedingungen aufeinander abzustimmen.

Zur Einhaltung einer Lebensmittelhygiene ist es zweckmäßig, die Wirkkammer einschließlich ihrer Komponenten (Anwirkkolben, Federelement insbesondere) aus Kunststoff, insbesondere Polyäthylen, herzustellen.

Wenn ein fester Verbund mehrerer Wirkkammern eingesetzt wird, müssen die davon zu erfassenden Teigstücke in Abständen voneinander angeliefert werden, welche den Abständen der Wirkkammern in deren Verbund entsprechen. Dann erst kann der Wirkkammer-Verbund einen Verband Teigstücke in entsprechender Anzahl formgerecht erfassen. Zur Lösung dieses Problems wird im Rahmen der allgemeinen erfinderischen Idee die im Anspruch 13 angegebene Anordnung zum Zuführen einzelner Teigstücke zu einer Teigstückwirkmaschine vorgeschlagen. Weitere Einzelheiten, Merkmale und vorteilhafte Ausgestaltungen ergeben sich aus den abhängigen Ansprüchen.

Dabei arbeitet das Wirkband wie ein Förderband und trägt die Teigstücke auf der Oberseite den Wirkkammern gegenüberliegend. Erfindungsgemäß werden zwei hintereinander angeordnete Zuführ-Förderbänder verwendet. Aufgrund seiner äquidistant intermittierenden Betriebsweise kann das zweite, nachgeordnete Zuführ-Förderband mehrere Funktionen erfüllen: Einerseits wird für die den Wirkkammern entsprechenden Abstände der Teigstücke voreinander gesorgt, indem im Moment der Übergabe von Teigstücken vom ersten Zuführ-Förderband das zweite Zuführband angehalten, dann wieder weiter bewegt und für die nächste Teigstück-Übergabe wieder angehalten wird; zum anderen ergibt sich mit der erfindungsgemäßen, auf dem zweiten, intermittierenden Zuführ-Förderband basierenden Anordnung der Vorteil, dass während des Stillstands des zweiten Zuführ-Förderbands es zwangsläufig zu einer fluchtenden Ausrichtung mehrerer gleichzeitig auf das zweite Zuführband übergebener Teigstücke quer zur Förder-oder Transportrichtung kommt. Von daher ist eine zuverlässige Übernahme der sowohl in Transport- und Förderrichtung als auch in einer Richtung quer dazu ausgerichteten Teigstücke durch den Wirkkammer-Verbund gefördert.

Um ein Verkleben oder Verschmutzen des Förderbandes durch sich ablösende Teigpartikel zu vermeiden, wird gemäß einer vorteilhaften Ausbildung der Erfindung das erste Zuführband mit seinem Ausgang derart über dem Eingang des zweiten Zuführbands angeordnet, dass Teigstücke vom ersten auf das zweite Zuführband mit einer gleichzeitigen Drehung um 180° um ihre Körperachse fallen können. Dadurch wird eine vorher mit Mehl bestreute Teigstück-Oberseite nach unten zur Auflage auf das zweite Zuführ-Förderband gedreht, wobei das auf das Teigstück gestreute Mehl ein Verschmutzen und Verschmieren des Förderbands mit Teigpartikeln weitgehend verhindert.

Weitere Einzelheiten, Merkmale, Vorteile und Wirkungen auf der Basis der Erfindung ergeben sich aus der nachfolgenden Beschreibung bevorzugter Ausführungsformen der Erfindung sowie aus den Zeichnungen. Diese zeigen in:
- Figur 1: in schematischer Seitenansicht ein Beispiel einer erfindungsgemäßen Teigwirkmaschine nebst einem Beispiel für eine erfindungsgemäße Teigstück-Zuführanordung,
- Figur 1a: in perspektivischer Unteransicht ein konkretisiertes Realisierungsbeispiel für die Luftfeder-Polsterung der Stützplatte unterhalb des Wirkbandes,
- Figur 2: eine Schnittansicht gemäß Linie II-II in Figur 3 eines Ausführungsbeispiels erfindungsgemäßer Wirkkammern,
- Figur 2a: eine Figur 2 entsprechende Schnittansicht eines alternativen Ausführungsbeispiels
- Figur 3: eine Ansicht etwa gemäß Linie III-III in Figur 2,
- Figur 3a: eine Unteransicht auf einen festen Verbund einer Mehrzahl regelmäßig angeordneter Wirkkammern,
- Figur 4: eine perspektivische Ansicht auf die Anordnung mit dem zweiten Zuführband und dem daran anschließenden Wirkband,
- Figur 5: eine perspektivische Seitenansicht auf die ersten und dritten Antriebsmittel der Wirkmaschine,
- Figur 6: eine schematische Grobdarstellung in Draufsicht auf den Exzentermechanismus zur Erzeugung einer spiralartigen Wirkbewegung für den Wirkkammerverbund,
- Figur 7: eine perspektivische Ansicht auf gemäß Erfindung fertig rundgewirkte Teigstücke.

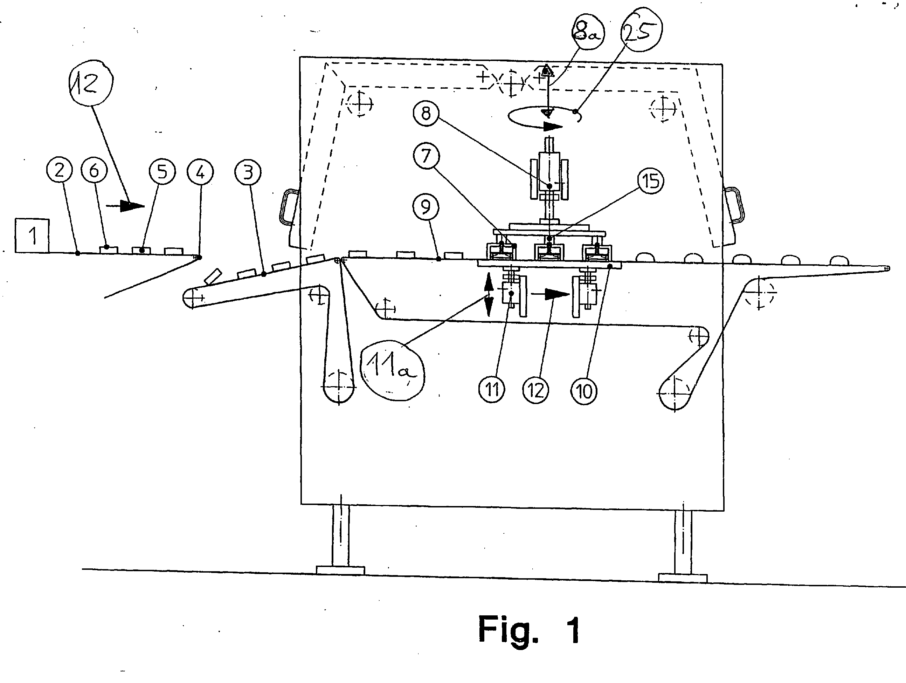

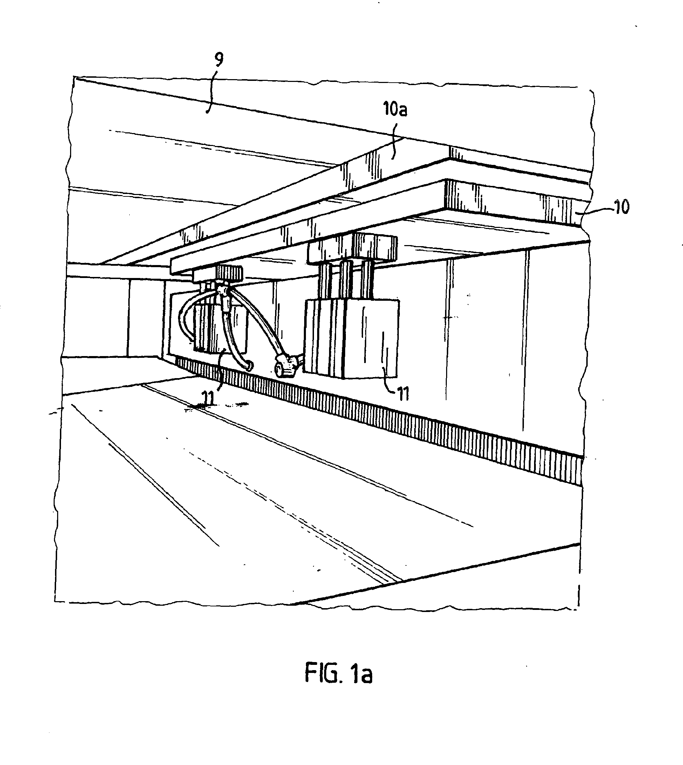

Gemäß Figur 1 erfolgt ein (nicht näher gezeichneter) Teigverarbeitungsschritt 1, welcher z. B. das Ausrollen eines Teigbands, das Schneiden einzelner Teigstücke daraus und deren divergierendes Weiterbefördern mittels Spreiz- Förderbänder (nicht gezeichnet) umfassen kann. Dadurch erhalten die einzelnen Teigstücke 5 vor allem quer zu einer Förderrichtung 12 der dargestellten, drei hintereinander angeordneten Zuführ- und Förderbänder 2, 3, 9 einen ausreichenden Abstand auch in Querrichtung voneinander. Allerdings besteht die Gefahr, dass in Förderrichtung 12 gesehen die Abstände der einzelnen Teigstücke voneinander auf dem ersten Zuführ-Förderband 2 noch nicht genau genug sind. Dies gilt auch für das Fluchten mehrerer Teigstücke miteinander in einer Richtung quer zur Förderrichtung 12. Zur Abhilfe ist das zweite Zuführ-Förderband 3 rampenartig zum Wirkband 9 ansteigend und mit seinem Eingangsbereich unterhalb einer Messerkantenform 4 des ersten Zuführ-Förderbandes liegend angeordnet. Der (nicht gezeichnete) Antriebsmotor des zweiten Zuführ-Förderbandes 3 wird zur Erzeugung einer intermittierenden Förderbewegung von einer (nicht gezeichneten) Steuerung angesteuert. Dabei wird das zweite Zuführ-Förderband 3 während des Zeitraums angehalten bzw. stillgesetzt, in dem vom ersten Zuführ-Förderband gerade eine Querreihe mit in Förderrichtung 12 nebeneinander auf ungefähr gleicher Höhe liegenden Teigstücken 5 über die Messerkante 4 auf das zweite Zuführ-Förderband 3 herabstürzt. Infolgedessen müssen die herabstürzenden Teigstücke 5 auf dem (noch stillgehaltenen) zweiten Zuführ-Förderband 3 genau in einer gemeinsamen Flucht quer zur Förderrichtung 12 zum Liegen kommen. Erfolgt zudem noch das abwechselnde Anhalten und Weiterbewegen des zweiten Zuführ-Förderbands 3 in gleichen bzw. äquidistanten Zeitabständen, ergibt sich auch in Förderrichtung 12 ein gleichmäßiger Abstand der Teigstücke voneinander, welcher bei entsprechender Einstellung der Steuerung den in Förderrichtung 12 gesehenen Abständen der Wirkkammern 7 voneinander entsprechen. Nach erfolgter Ausrichtung in Querrichtung wird also der Verband der ausgerichteten Teigstück-Querreihe um einen Takt oder Schritt auf dem zweiten Zuführ-Förderband 3 nach vorne bewegt. Beim Herabstürzen der vorzugsweise quaderartig flachen Teigstücke 5 vom ersten Zuführ-Förderband 2 auf das zweite Zuführ-Förderband 3 ergibt sich eine Drehung der Teigstücke 5 um eine körpereigene Achse quer zur Förderrichtung 12, wobei die dem ersten Zuführ-Förderband 2 zugewandte Teigstückseite nach oben geklappt wird, während die auf dem ersten Zuführ-Förderband 2 gegebenenfalls bereits mit Mehl bestreute Oberseite auf dem zweiten Zuführ-Förderband 3 zur aufliegenden Unterseite wird. Ein damit erzielter Vorteil besteht darin, dass die dem ersten Zuführ-Förderband 2 zugewandte, deshalb noch feuchter gebliebene Teigstückseite auf dem zweiten Zuführ-Förderband 3 nach oben bzw. außen gerichtet ist und so besser trocknen kann, während die bereits auf dem ersten Zuführ-Förderband 2 trockener gewordene Teigstückseite bei dem zweiten nun die Auflage bildet.

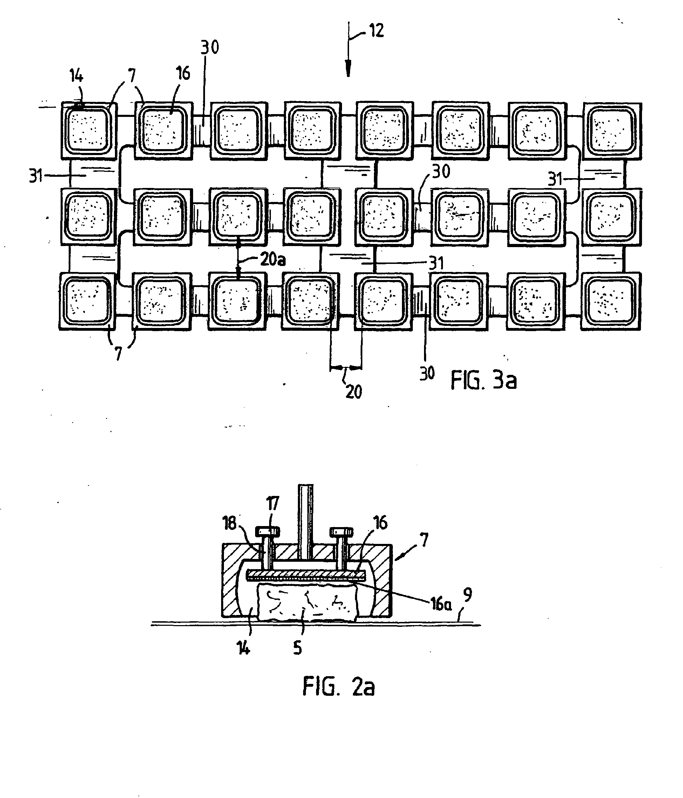

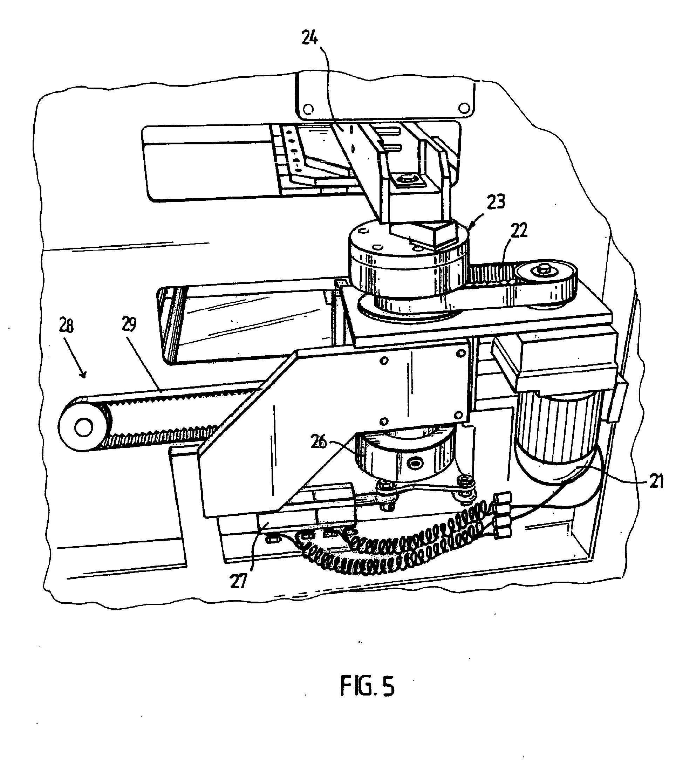

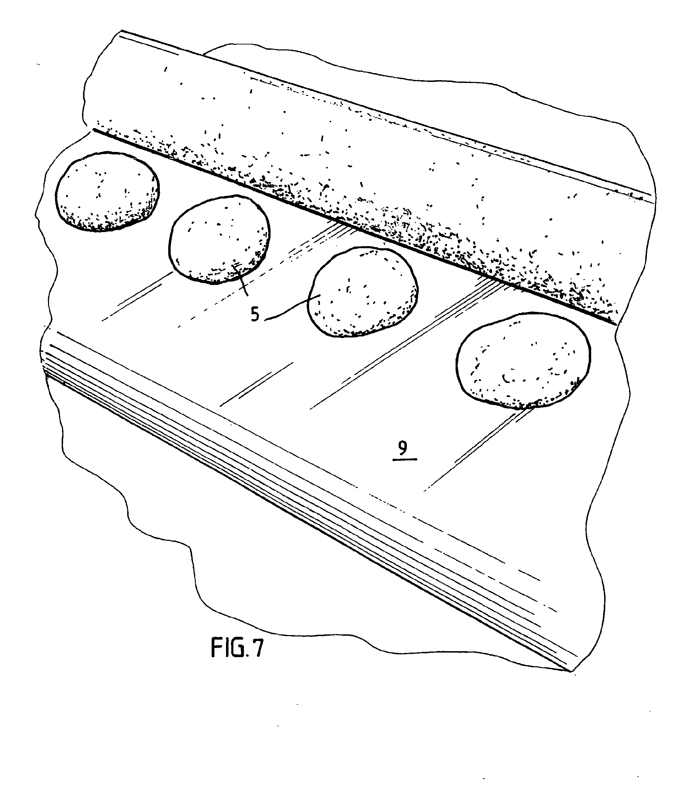

Gemäß Figur 1 werden die Teigstücke 5 vom zweiten Zuführ-Förderband 3 auf das Wirkband 9 weitertransportiert, das zu diesem Zweck mit seinem Eingang unmittelbar am Ausgang des zweiten Zuführ-Förderbands 3 anschließt. Sowohl die Teigstücke 5 als auch die je einem Wirkzyklus zugeordneten Verbände mit einer Mehrzahl von Teigstücken neben- und hintereinander sind in ihren Abständen zueinander, sowohl in Förder-Querrichtung als auch in Förderrichtung, aufgrund des intermitierenden Betriebs des zweiten Zuführ-Förderbands 3 entsprechend den Quer- und Längs-Abständen der Wirkkammern 7 untereinander und der Zeitdauer eines Hin- und Herbewegungs-Hubs des Wirkkammer-Verbunds pro Wirkzyklus ausgerichtet. Damit am Ende eines Wirkzyklus die gemäß Figur 1 (und Figur 7) rundgewirkten Teigstücke freigegeben werden, ist der Wirkkammer-Verbund (siehe Figur 3a) gemäß schematischer Andeutung in Figur 1 mit einem Hebeantrieb 8 verbunden, welcher dem Wirkkammer-Verbund auf- und abgehende Hubbewegungen 8a zum und vom Förderband zeitgerecht zur Freigabe rundgewirkter Teigstücke und zum Erfassen noch rund zu wirkender, neu vom zweiten Zuführ-Förderband 3 angelieferter Teigstücke erteilt. Die gesamte Wirkanordnung 7, 8 ist unmittelbar über dem Wirkband 9 angeordnet, während an der anderen Wirkbandseite die elastisch federnde Stützanordnung 10,11 anliegt. Wie auch aus Figur 3a hervorgeht, sind gemäß gezeichnetem Beispiel drei Reihen Wirkkammern 7 in Förderrichtung 12 mit Längsabständen 20a hintereinander liegend angeordnet. Nach dem Absenken der Wirkkammern 7 durch den Hebeantrieb 8 auf neu rundzuwirkende Teigstücke 5 werden durch die Steuerung (nicht gezeichnete) Antriebsmittel für den in Figur 3a gezeichneten Wirkkammer-Verbund derart angesteuert, dass letzterer in an sich bekannter Weise unter dem Einfluß eines Überlagerungsgetriebes (siehe Figur 5) aus einer Null- bzw. Ausgangsstellung heraus längs einer exzentrisch-spiralartig verlaufenden Bahn ausgelenkt und exzentrisch-spiralartig wieder in die Ausgangsstellung zurückgeführt wird.

Gemäß Figur 3a besteht der in der Ansicht von unten auf die Kammeröffnungen dargestellte, erfindungsgemäße Teigkammer-Verbund aus drei Querreihen mit je acht Wirkkammern, die in Förderrichtung 12 nebeneinander liegen. Sie werden durch ein Verbundgestell zusammengehalten, das die einzelnen Kammern 7 einer Querreihe verbindende Querstreben 30 und drei Längsstreben 31 aufweist, welche symmetrisch bezüglich der Wirkkammern 7 angeordnet sind, die jeweils gleiche Quer- und Längs-Abstände 20, 20a voneinander aufweisen. Die Längsabstände 20a entsprechen denen der Teigstücke 5 voneinander in Förderrichtung 12, wie sie mittels des angesprochenen, intermittierenden Betriebs auf den zweiten Zuführ-Förderband 3 und dem Wirkband 9 hergestellt worden sind.

Gemäß Figur 1 und 1a liegt an der Unterseite des Wirkbands 9 eine steife Stützplatte 10 an, der gemäß Figur 1a auch noch eine Zwischenplatte 10a zwischengeschaltet sein kann. Die steife Stützplatte 10 wird von mehreren, jeweils an ihrer Unterseite angreifenden Pneumatikfedern 11 gegen das horizontal verlaufende, parallele Wirkband 9 gedrückt. Gemäß Beispiel in Figur 1a sind die Pneumatikfedern 11 als aktive Pneumatikzylinder realisiert, welche von einer Steuerung oder Regelung (mit Erfassung der Wirkband-Belastung als Istwert beispielsweise) kontrolliert und/oder auch manuell eingestellt sein kann, um die Federkonstante der damit aufgebauten Luftfederung bzw. -polsterung im Sinne einer schonenden Teigbearbeitung zu beeinflussen. Es liegt natürlich auch im Rahmen der Erfindung, alternativ passive Gas- bzw. Luftfedern oder sonstige Federelemente, z. B. Schraubenfedern oder dergleichen einzusetzen. Mit Aufsetzen der gegenüberliegenden Stirnwandungen auf das Wirkband kann sich eine Auslenkung der Pneumatikfedern 11 ergeben, welche als Istwert im Rahmen der genannten Regelung erfasst und zur Ansteuerung der Pneumatikzylinder weiterverarbeitet wird. Damit wird während des Wirkprozesses der Stützplatte 10 ein Bewegungsverhalten gegeben, das sich durch eine adaptiv elastische Nachgiebigkeit gegenüber einer Volumenvergrößerung des in der Wirkkammer gereiften Teigstücks auszeichnet.

Während des Wirkprozesses wird die Förderbewegung 12 für die Teigstücke 5 auf dem Wirkband 9 beibehalten. Damit synchron werden über weitere Antriebsmittel 28,29 (siehe Figur 5) der Verbund mit Wirkkammern 7, deren Hebeantrieb 8, die Stützplatte 10, gegebenenfalls mit Zwischenplatte 10a, sowie die Pneumatikfedern 11 gleichsinnig und mit gleicher Geschwindigkeit mitbewegt, bis der Wirkvorgang abgeschlossen ist. Dann wird der Hebeantrieb 8 zum Hochheben des Wirkkammer-Verbunds angesteuert, und gleichzeitig oder danach sorgen die genannten Antriebsmittel 28,29 für eine Rückbewegung des Wirkkammer-Verbunds mit Hebeeinrichtung 8 sowie der Stützplatte 10 mit Pneumatikfedern 11. Die Förderbewegung des Wirkbands 9 in Richtung 12 bleibt davon unberührt.

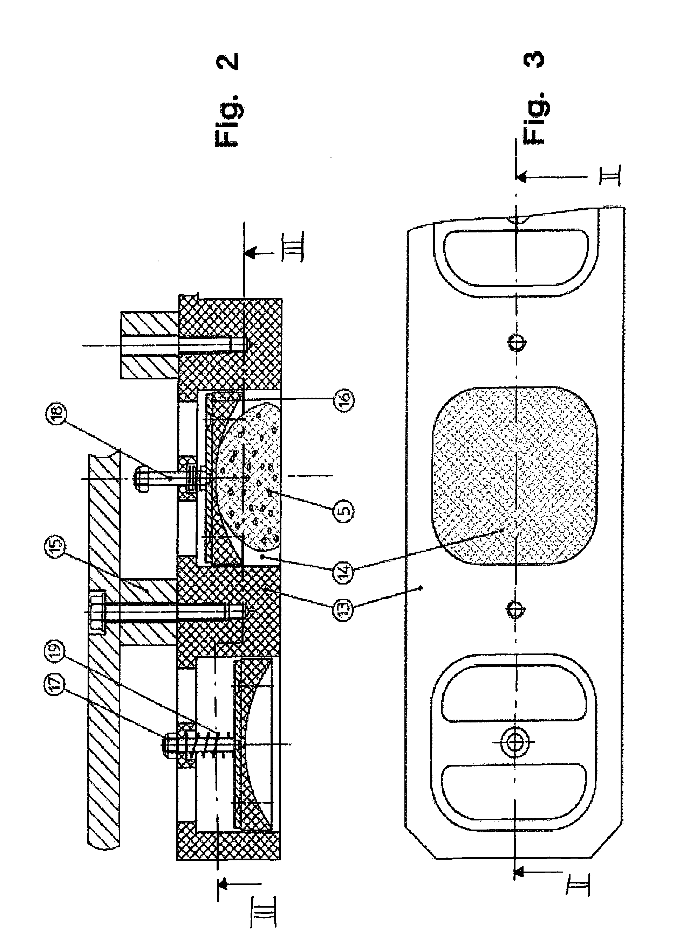

Gemäß Figur 2 ist der Wirkkammer-Verbund weitgehend aus Kunststoff, insbesondere Polyäthylen, hergestellt. Das Verbundgehäuse 13 umfaßt mehrere Wirkkammern jeweils mit einem Hohlraum 14 versehen und ist über Schraubverbindungen an einem Halterungsgestell 15 aufgehangen. Das Halterungsgestell 15 kann mit dem Hebeantrieb 8 zur Bewirkung der Hubbewegung 8a für das Verbundgehäuse 13 und/oder von den genannten Antriebsmitteln zur Hin- und Herbewegung des Verbundgehäuses 13 längs des Wirkbandes 9 verbunden sein. Eine den Hohlraum 14 begrenzende Deckenseite ist von einem Hubstössel 18 mit Anschlagkopf 17 am Ende durchsetzt. Am anderen Ende ist eine Anwirkplatte 16 befestigt, die aus ihrer in Kammeröffnung gerichteten Unterseite mit einer rundlich nach innen gewölbten Konkavität gestaltet ist. Der Hubstössel 18 ist von einer Schraubenfeder 19 umwunden, welche an einem Ende gegen die dem Kammerinneren zugewandte Oberseite der Anwirkplatte drückt. Das andere Federende ist in einem becherartigen Anschlagsitz aufgenommen bzw. abgestützt, der in die obere Deckenseite der Kammer- bzw. Verbundgehäusewandung integriert ist. In der linken Hälfte der Figur 2 ist die Anwirkplatte 16 in einer zur Kammeröffnung hin ausgefahrenen Ausgangsstellung gezeigt, wobei die Schraubenfeder 19 entspannt und expandiert ist. Gemäß rechter Hälfte der Figur 2 ist die Schraubenfeder 19 dagegen zusammengedrückt bzw. auf Druck gespannt bzw. belastet, wobei der Hubstössel 18 von der Deckenseite nach oben vorsteht, und der Anschlagkopf 17 einen entsprechenden Abstand zur Oberseite des Verbundgehäuses 13 aufweist. Dies rührt daher, dass sich im Hohlraum 14 der Wirkkammer 7 ein zumindest angewirktes Teigstück 5 befindet, das aufgrund seines Volumens die Anwirkplatte 16 nach oben und damit die Schraubenfeder 19 zusammendrückt. Mit besonderem Vorteil lassen sich die Pneumatikfedern 11 gemäß Figur 1 und die Schraubenfedern 19 gemäß Figur 2 während des Wirkprozesses in eine wechselseitige Wirkungsverbindung setzen, wodurch der angestrebte Teig-Schonungseffekt nochmals synergistisch erhöht wird. Dazu ist es zweckmäßig, die Federkonstanten der Schraubenfedern 19 und der Pneumatikfedern 11 je nach Umständen und Randbedingungen vorzugsweise in Echtzeit dynamisch aufeinander abzustimmen. Sobald sich nach Neu-Aufbnahme eines noch ungewirkten Teigstücks 5 die Anwirkplatte 16 unter Einwirkung der Schraubenfedern 19 auf das Teigstück 5 absenkt, wird es zuverlässig mit Reibschluß auf der Oberfläche des Wirkbands 9 gehalten. Insbesondere läßt sich ein erster, reibschlüssiger Kontakt zwischen der Wirkbandoberfläche und der Unterseite des Teigstücks 5 mittels der Anwirkplatte 16 herstellen. Im weiteren Wirkprozeß, vor allem wenn die Wirkkammern spiralartig-exzentrischen Bewegungsbahnen unterworfen werden, wird ein unkontrolliertes Taumeln oder Bewegen des Teigstücks 5 im Hohlraum 14 vermieden. Die Konkavität, insbesondere wenn sie an der Unterseite der Anwirkplatte 16 kugelartig ausgeformt ist, ergibt die rundliche Endform des Teigstücks, wie in Figur 7 dargestellt. Aus Figur 3 ist vor allem die Rundung der Eckbereiche der Wirkkammern 7 bzw. Hohlräume 14 erkennbar, was weiter das Rundwirken der Teigstücke 5 fördert.

Gemäß Figur 2a unterscheidet sich die darin dargestellte Wirkkammer 7 von der gemäß Figuren 1 und 2 dadurch, dass zwischen der Oberseite der Anwirkplatte 16 und der Deckenseite der Wirkkammer 7 bzw. des Hohlraums 14 eine Schraubenfeder nicht eingefügt bzw. nicht verwendet ist. Die Anwirkplatte 16 kommt gemäß Figur 2a allein aufgrund ihres Eigengewichts auf das noch nicht gewirkte, noch eckige Teigstück 5 zur Auflage. Im Unterschied zu Figuren 2 und 3 ist die Anwirkplatte 16 nach Figur 2a auf ihrer dem Teigstück 5 zugewandten Seite mit einem Filzbesatz 16a versehen.

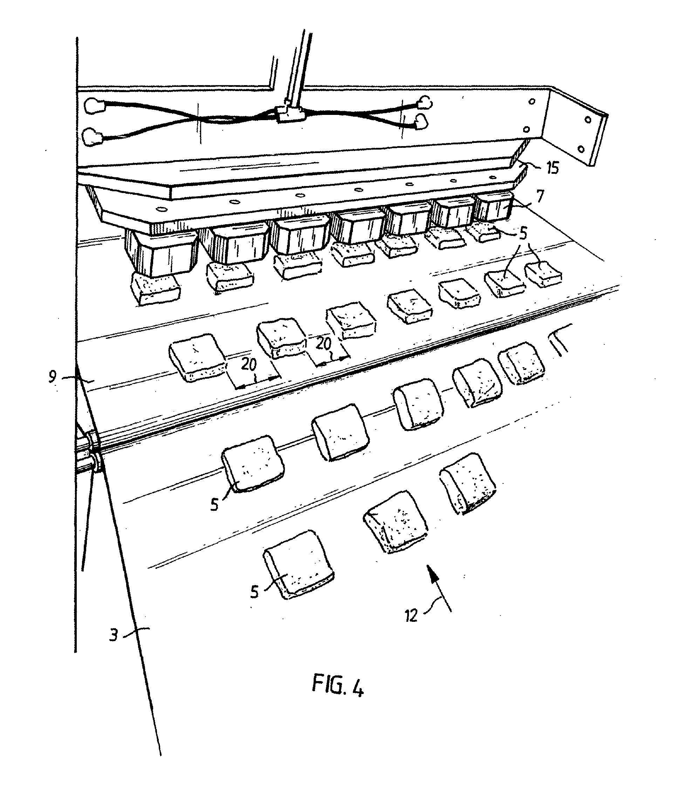

In Figur 4 sind die eckig ausgeschnittenen Ausgangsformen der Teigstücke 5 erkennbar. Zur Erhöhung des Durchsatzes werden auf dem zweiten Zuführ-Förderband 3 und dem Wirkband 9 hintereinander angeordnete Querreihen mit jeweils sieben Teigstücken 5 transportiert, die je einer Wirkkammer 7 zugeordnet sind und dafür Abstände 20,20a voneinander aufweisen, welche denen der Wirkkammern 7 voneinander entsprechen.

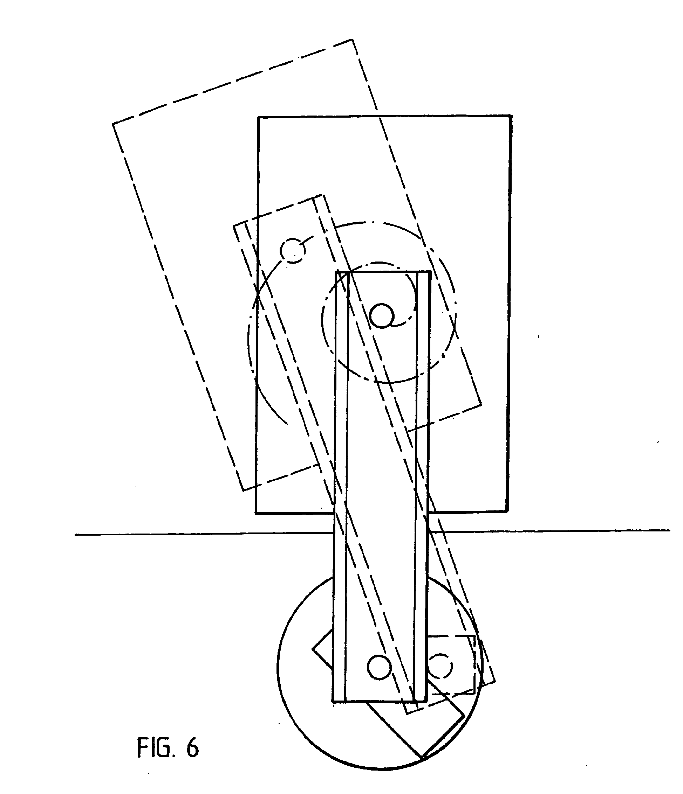

Gemäß Figur 5 ist von einem Antriebsmotor 21 über einen Zahnriemen 22 ein Exzentermechanismus 23 angetrieben (an sich bekannt), der dazu dient, über einen grob angedeuteten Querbalken 24 dem Wirkkamer-Verbund exzentrisch kreisende Bewegungen 25 zu erteilen. Damit diese von einer Null-Ausgangsstellung ausgehend mit sich spiralartig aufweitender Bewegungsbahn verlaufen, und gegenüber dem Wirkband 9 ein maximaler Wirkausschlag realisiert wird (siehe schematisch angedeutete Bewegungsdarstellung in Figur 6), kann gemäß Figur 5 auf den Exzentermechanismus 23 noch ein an sich bekanntes Überlagerungsgetriebe 26 einwirken. Dieses wird von einem Mehrstellungszylinder 27 angesteuert, wodurch sich zur Herbeiführung der spiralartigen Bewegung die Exzentrizität vergrößern oder verkleinern läßt. Alternativ könnte im Rahmen der Erfindung die Exzentrizität auch mit einem Servomotor eingestellt und verändert werden. Die exzentrische Auslenkung wäre dabei stufenlos und läßt sich so an die Teigstückgröße und die Teigbeschaffenheit optimal anpassen.

Ferner ist in Figur 5 teilweise ein Riementrieb 28 mit Antriebs-Zahnriemenstrang 29 gezeichnet, der sich über die Länge des oben angesprochenen, horizontalen Bewegungshubs des Wirkkammer-Verbunds und der federnden Abstützung erstreckt

In Figur 7 ist das erzielbare Ergebnis fertig rundgewirkter Teiglinge veranschaulicht.

### Bezugszeichenliste

- 1: Teigverarbeitungsschritt
- 2: erstes Zuführ-Förderband
- 3: zweites Zuführ-Förderband
- 4: Messerkante
- 5: Teigstück
- 6: bemehlte Oberseite
- 7: Wirkkammer
- 8: Hebeantrieb
- 8a: Hubbewegung
- 9: Wirkband
- 10: Stützplatte
- 10a: Zwischenplatte
- 11: Pneumatikfeder
- 11a: Ausgleichsbewegungen
- 12: Förderrichtung
- 13: Verbundgehäuse
- 14: Hohlraum
- 15: Halterungsgestell
- 16: Anwirkplatte
- 16a: Filzbesatz
- 17: Anschlagkopf
- 18: Hubstössel
- 19: Schraubenfeder
- 20: Querabstände
- 20a: Längsabstände
- 21: Antriebsmotor
- 22: Zahnriemen
- 23: Exzentermechanismus
- 24: Querbalken
- 25: Wirkbewegung
- 26: Überlagerungsgetriebe
- 27: Mehrstellungszylinder
- 28: Riementrieb
- 29: Antriebs-Zahnriemenstrang
- 30: Querstreben
- 31: Längsstreben

## Patentansprüche

1. Rundwirkmaschine für Teigstücke (5) insbesondere zur Brötchenherstellung, mit einer oder mehreren Wirkkammern (7), mit einem zu deren Abdeckung angeordneten Wirkband (9) und mit einem federnd abgestützten Druckkörper (10), mittels welchem unter Mitwirkung eines oder mehrerer dämpfender Federelemente (11) das Wirkband (9) gegen Öffnungen der einen oder mehreren Wirkkammern (7) anlegbar und/oder haltbar ist, wobei am Druckkörper (10) das oder die Federelemente (11) direkt angreifen und das Wirkband (9) als die Teigstücke (5) auf seiner Oberseite tragendes Förderband ausgebildet ist, über welchem unmittelbar die eine oder mehreren Wirkkammern (7) angeordnet sind. **dadurch gekennzeichnet, dass** der Druckkörper (10) als steife Stützplatte oder steifer Stützbogen ausgeführt und unmittelbar unterhalb der Innenseite des Wirkbands (9) angeordnet ist.

2. Maschine nach Anspruch 1, **dadurch gekennzeichnet, dass** die Federelemente (11) in einem Platten- oder Bogen-Abschnitt in Angriff gebracht sind, der deckungsgleich mit den Wirkkammer-Öffnungen angeordnet ist.

3. Maschine nach Anspruch 1 oder 2, **dadurch gekennzeichnet, dass** das oder die Federelemente (11) mit ihren Federkräften quer beziehungsweise senkrecht zum Wirkband (9) ausgerichtet sind.

4. Maschine nach einem der vorangehenden Ansprüche, **dadurch gekennzeichnet, dass** die Stützplatte (10) oder der Stützbogen parallel zum Wirkband (9) verlaufen.

5. Maschine nach einem der vorangehenden Ansprüche, **dadurch gekennzeichnet, dass** das oder die Federelemente (11) als Gasfedern und/oder als vorzugsweise aktive Hydraulik- oder Pneumatikzylinder realisiert sind.

6. Maschine nach einem der vorangehenden Ansprüche, **gekennzeichnet durch** erste Antriebsmittel, welche zu einer Hin- und Herbewegung der einen oder mehreren Wirkkammern (7) längs einer exzentrisch oder spiralartig verlaufenden Bahn (Fig.6) in einer Fläche oder Ebene parallel zum Wirkband (9) ausgebildet sind.

7. Maschine nach einem der vorangehenden Ansprüche, **gekennzeichnet durch** zweite Antriebsmittel, welche zu einer Hin- und Herbewegung der einen oder mehreren Wirkkammern (7) senkrecht zum beziehungsweise vom Wirkband (9) ausgebildet sind.

8. Maschine nach einem der vorangehenden Ansprüche, **gekennzeichnet durch** dritte Antriebsmittel, welche zum Hin- und Herbewegen der einen oder mehreren Wirkkammern (7), des Wirkbands (9) und des Druckkörpers (10) synchron zueinander in eine Teigstück-Förderrichtung (12) über einen vorbestimmten Bewegungshub ausgebildet sind.

9. Maschine nach Anspruch 8, **dadurch gekennzeichnet, dass** die dritten Antriebsmittel einen Ketten- oder Riementrieb (28) mit einem per Antriebsmotor und -rad hin- und herbewegbaren Antriebsstrang (29) aufweisen, womit die eine oder mehreren Wirkkammern (7) gegebenenfalls mit den ersten und/oder zweiten Antriebsmitteln, der Druckkörper (10) mit Federelementen (11) und das Wirkband (9) verbunden, gekoppelt und/oder synchronisiert sind, und sich der Antriebsstrang (29) wenigstens über die Länge des Bewegungshubs erstreckt.

10. Maschine nach einem der vorangehenden Ansprüche, **dadurch gekennzeichnet, dass** das Wirkband (9) als linear verlaufendes Förderband ausgebildet ist.

11. Wirkmaschine nach einem der vorangehenden Ansprüche, **dadurch gekennzeichnet, dass** die Wirkkammer (7) einen in der Kammerwandung zum Teigstück (5) führbaren Anwirkkolben oder platte (16) aufweist, der aufgrund eines Gewichtselements und/oder mittels der Kraft eines an der Kammerwandung abgestützten Federelements oder aktiven Druckzylinders gegen das Teigstück (5) drückbar ist.

12. Wirkmaschine nach einem der vorangehenden Ansprüche, **dadurch gekennzeichnet, dass** die Wandung der Kammer (7) und/oder gegebenenfalls der Anwirkkolben oder -platte (16) und/oder gegebenenfalls das Federelement mit Kunststoff, vorzugsweise Polyäthylen, hergestellt sind.

13. Wirkmaschine nach einem der vorangehenden Ansprüche, welche Wirkmaschine eine Mehrzahl Wirkkammern (7) aufweist, die in einer Teigstück-Förderrichtung (12) versetzt hintereinander angeordnet sind, **gekennzeichnet durch** eine Anordnung zum Zuführen einzelner Teigstücke (5) mit einer Reihenanordnung aus einem ersten (2) und einem dem ersten derart nachgeordneten, zweiten Zuführband (3), dass vom ersten Zuführband (2) auf seiner Oberfläche beförderte Teigstücke (5) dem zweiten (3) direkt übergeben werden, wobei das zweite Zuführband (3) ausgangsseitig dem Wirkband (9) direkt zugeordnet ist, und der Antriebsmotor des zweiten Zuführbandes mit einer Steuerung verbunden ist, welche programm- und/oder schaltungstechnisch zur Ansteuerung des Antriebsmotors für äquidistant intermittierenden Betrieb derart eingerichtet ist, dass während einer Übergabe mindestens eines Teigstücks (5) vom ersten (2) an das zweite Zuführband (3) eine Förderbewegung des zweiten Zuführbands (3) ausgesetzt wird.

14. Anordnung nach Anspruch 13, **dadurch gekennzeichnet, dass** dem ersten Zuführband (2) eine Schneidstation für ein Teigband zur Bildung einzelner Teigstücke (5) daraus und/oder ein Spreiz-Förderband für die Vereinzelung geschnittener Teigstücke (5) vorgeordnet sind.

15. Anordnung nach Anspruch 13 oder 14, **dadurch gekennzeichnet, dass** das erste Zuführband (2) mit seinem Ausgang derart über dem Eingang des zweiten Zuführbands (3) angeordnet ist, dass Teigstücke (5) vom ersten (2) auf das zweite Zuführband (3) mit einer Drehung um 180° um ihres Körperachse fallen können.

## Claims

1. Balling machine for dough pieces (5), in particular for the manufacture of bread rolls, having one or more dough-working chambers (7), with a dough-working belt (9) disposed so as to cover the same and with a resiliently supported pressure body (10), by means of which, with the cooperation of one or more damping spring elements (11), the dough-working belt (9) may be applied and/or held against apertures in the one or more dough-working chambers (7), wherein the spring element(s) (11) act(s) directly on the pressure body (10) and the dough-working belt (9) is formed as a conveyor belt which carries the dough pieces (5) on its upper face and over which the one or more dough-working chambers (7) are directly disposed, **characterised in that** the pressure body (10) is formed as a rigid support plate or rigid support sheet and is disposed directly below the inner face of the dough-working belt (9).

2. Machine according to claim 1, **characterised in that** the spring elements (11) are brought into action in a section of plate or sheet which is disposed congruently with the dough-working chamber apertures.

3. Machine according to claim 1 or 2, **characterised in that** the spring element(s) (11) is/are aligned with their spring forces transverse or perpendicular to the dough-working belt (9).

4. Machine according to one of the preceding claims, **characterised in that** the support plate (10) or support sheet extends parallel to the dough-working belt (9).

5. Machine according to one of the preceding claims, **characterised in that** the spring element(s) (11) is/are realised as gas springs and/or as preferably active hydraulic or pneumatic cylinders.

6. Machine according to one of the preceding claims, **characterised by** first drive means, which are formed for reciprocating movement of the one or more dough-working chambers (7) along an eccentric or spirally extending path (Fig. 6) in an area or plane parallel to the dough-working belt (9).

7. Machine according to one of the preceding claims, **characterised by** second drive means, which are formed for reciprocating movement of the one or more dough-working chambers (7) perpendicular to or from the dough-working belt (9).

8. Machine according to one of the preceding claims, **characterised by** third drive means, which are formed for reciprocating movement of the one or more dough-working chambers (7), of the dough-working belt (9), and of the pressure body (10) synchronously with one another in a dough piece conveying direction (12) over a predetermined movement stroke.

9. Machine according to claim 8, **characterised in that** the third drive means have a chain or belt drive (28) with a drive strand (29) which may reciprocate by means of a drive motor and wheel, whereby the one or more dough-working chambers (7) with the first and/or second drive means, the pressure body (10) with the spring elements (11), and the dough-working belt (9) are optionally connected, coupled and/or synchronised, and the drive strand (29) extends at least over the length of the movement stroke.

10. Machine according to one of the preceding claims, **characterised in that** the dough-working belt (9) is formed as a linearly extending conveyor belt.

11. Dough-working machine according to one of the preceding claims, **characterised in that** the dough-working chamber (7) has a dough-working piston or plate (16) which is guidable on to the dough piece (5) in the chamber wall and which due to a weighting element and/or by means of the force of a spring element supported on the chamber wall or active pressure cylinder may be pressed against the dough piece (5).

12. Dough-working machine according to one of the preceding claims, **characterised in that** the wall of the chamber (7) and/or optionally the dough-working piston or plate (16) and/or optionally the spring element are manufactured from plastics material, preferably polyethylene.

13. Dough-working machine according to one of the preceding claims, which machine has a plurality of dough-working chambers (7), which are disposed spaced apart consecutively in a dough-piece conveying direction (12), **characterised by** an arrangement for supplying individual dough pieces (5), having a series arrangement composed of a first (2) and a second supply belt (3) disposed downstream of the first in such a manner that dough pieces (5) conveyed by the first supply belt (2) on its surface are transferred direct to the second (3), wherein the second supply belt (3) is directly allocated to the dough-working belt (9) on the output side, and the drive motor of the second supply belt is connected to a control, which is so arranged by programming and/or circuit technology to trigger the drive motor for equidistantly staggered operation that during transfer of at least one dough piece (5) from the first (2) to the second supply belt (3) a conveyor motion of the second supply belt (3) is suspended.

14. Arrangement according to claim 13, **characterised in that** a cutting station for a dough strip for the formation of individual dough pieces (5) and/or a spreading conveyor belt for separating cut dough pieces (5) is disposed upstream of the first supply belt (2).

15. Arrangement according to claim 13 or 14, **characterised in that** the first supply belt (2) is so disposed with its exit over the entrance of the second supply belt (3) that dough pieces (5) can drop from the first (2) on to the second supply belt (3) with a rotation through 180° about their body axis.

## Revendications

1. Machine de mise en boule de morceaux de pâte (5), en particulier pour la fabrication de petits pains, comprenant un ou plusieurs compartiments actifs (7), une bande active (9) disposée pour leur recouvrement et un corps de pression (10) supporté sur ressorts, au moyen duquel, par effet concomitant d'un ou de plusieurs éléments amortisseurs (11), la bande active (9) peut être appliquée ou maintenue contre des ouvertures de l'un ou de plusieurs compartiments actifs (7), le ou les éléments à ressorts (11) agissant directement sur le corps de pression (10) et la bande active (9) étant réalisée sous forme de bande transporteuse qui supporte les morceaux de pâte (5) sur son côté supérieur, bande sur laquelle sont disposés directement l'un ou plusieurs des compartiments actifs (7), **caractérisée en ce que** le corps de pression (10) est réalisé sous forme de plaque d'appui rigide ou d'arc d'appui rigide et est disposé directement au-dessous du côté intérieur de la bande active (9).

2. Machine suivant la revendication 1, **caractérisée en ce que** les éléments à ressorts (11) sont amenés en prise dans une section de plaque ou d'arc, disposée en coïncidence avec les ouvertures des compartiments actifs.

3. Machine suivant l'une des revendications 1 et 2,
**caractérisée en ce que** le ou les éléments à ressorts (11) sont orientés par leurs forces de ressort transversalement ou perpendiculairement à la bande active (9).

4. Machine suivant l'une des revendications précédentes, **caractérisée en ce que** la plaque d'appui (10) ou l'arc d'appui s'étend parallèlement à la bande active (9).

5. Machine suivant l'une des revendications précédentes, **caractérisée en ce que** le ou les éléments à ressorts (11) sont réalisés sous forme de ressorts à gaz et/ou sous forme de cylindres hydrauliques ou pneumatiques de préférence actifs.

6. Machine suivant l'une des revendications précédentes, **caractérisée par** des premiers moyens d'entraînement, qui sont réalisés pour un mouvement de va-et-vient de l'un ou de plusieurs compartiments actifs (7) le long d'une trajectoire excentrique ou en spirale (figure 6) dans une surface ou un plan parallèlement à la bande active (9).

7. Machine suivant l'une des revendications précédentes, **caractérisée par** des deuxièmes moyens d'entraînement, qui sont réalisés pour un mouvement de va-et-vient de l'un ou de plusieurs compartiments actifs (7) perpendiculairement ou à l'écart de la bande active (9).

8. Machine suivant l'une des revendications précédentes, **caractérisée par** des troisièmes moyens d'entraînement, qui sont réalisés pour un mouvement de va-et-vient de l'un ou de plusieurs compartiments actifs (7), de la bande active (9) et du corps de pression (10), en synchronisme mutuel, dans une direction de transport (12) des morceaux de pâte sur une course de déplacement prédéfinie.

9. Machine suivant la revendication 8, **caractérisée en ce que** les troisièmes moyens d'entraînement comportent une transmission par chaîne ou par courroie (28) avec une section d'entraînement (29) pouvant être animée d'un mouvement de va-et-vient par moteur de commande et roue motrice, le ou les multiples compartiments actifs (7) éventuellement avec les premiers et/ou deuxièmes moyens d'entraînement, le corps de pression (10) avec des éléments à ressorts (11) et la bande active (9) étant ainsi assemblés, couplés et/ou synchronisés, et la section d'entraînement (29) s'étendant au moins sur la longueur de la course de déplacement.

10. Machine suivant l'une des revendications précédentes, **caractérisée en ce que** la bande active (9) est réalisée sous forme de bande transporteuse linéaire.

11. Machine de mise en boule suivant l'une des revendications précédentes, **caractérisée en ce que** le compartiment actif (7) comporte un piston ou plaque de mise en boule (16), qui peut être guidé en direction du morceau de pâte (5) dans la paroi du compartiment et peut être pressé contre le morceau de pâte (5) en raison d'un élément de poids et/ou au moyen de la force d'un élément à ressort supporté sur la paroi du compartiment ou d'un cylindre de pression actif.

12. Machine de mise en boule suivant l'une des revendications précédentes, **caractérisée en ce que** la paroi des compartiments (7) et/ou éventuellement le piston ou la plaque de mise en boule (16) et/ou éventuellement l'élément à ressort sont fabriqués en matière plastique, de préférence en polyéthylène.

13. Machine de mise en boule suivant l'une des revendications précédentes, laquelle machine comporte une pluralité de compartiments actifs (7) disposés en déport les uns derrière les autres dans une direction de transport (12) des morceaux de pâte, **caractérisée par** un agencement pour l'arrivée de morceaux de pâte individuels (5) avec un agencement en série constitué d'une première bande d'alimentation (2) et d'une deuxième bande d'alimentation (3) disposée en aval de cette dernière de telle sorte que des morceaux de pâte (5) acheminés par la première bande transporteuse (2) sur la surface de cette dernière sont transférés directement sur la deuxième (3), la deuxième bande d'alimentation (3) étant directement associée côté sortie à la bande active (9), et le moteur de commande de la deuxième bande d'alimentation étant raccordé à une commande conçue au plan de la technique de programmation et/ou de commutation pour l'attaque du moteur de commande, pour un fonctionnement intermittent à équidistance, de telle sorte que, pendant un transfert d'au moins un morceau de pâte (5) de la première (2) sur la deuxième bande d'alimentation (3), un mouvement de transport est conféré à la deuxième bande d'alimentation (3).

14. Agencement suivant la revendication 13, **caractérisé en ce qu'**un poste de coupe pour une bande de pâte, pour en former des morceaux de pâte individuels (5), et/ou une bande transporteuse d'écartement pour la séparation de morceaux de pâte coupés (5), sont montés en amont de la première bande d'alimentation (2).

15. Agencement suivant l'une des revendications 13 et 14, **caractérisé en ce que** la première bande d'alimentation (2) est disposée par sa sortie au-dessus de l'entrée de la deuxième bande d'alimentation (3) de telle sorte que des morceaux de pâte (5) peuvent chuter de la première (2) sur la deuxième bande d'alimentation (3) avec une rotation de 180° autour de l'axe de leur corps.
